# EUROPEAN PATENT SPECIFICATION

(11) **EP 1 277 816 B1**
(45) Date of publication and mention of the grant of the patent: **08.11.2006**
(21) Application number: 01923976.3
(22) Date of filing: 24.04.2001
(51) Int. Cl.: C09D 201/08, C09D 201/10, C09D 5/16, C09D 193/04

(54) **ANTIFOULING COATING MATERIAL, ANTIFOULING COATING FILM, SUBMERGED STRUCTURE, AND ANTIFOULING METHOD**
ANTIFOULING-BESCHICHTUNGSMATERIAL, ANTIFOULING-BESCHICHTUNGSFILM, GETAUCHTE STRUKTUR UND ANTIFOULING-METHODE
MATERIAU PROTECTEUR ANTISALISSURE, FILM PROTECTEUR ANTISALISSURE, STRUCTURE SUBMERGEE ET PROCEDE D'INHIBITION DES SALISSURES

(30) Priority: 24.04.2000 JP 2000123277
(43) Date of publication of application: 22.01.2003
(73) Proprietor: BASF Coatings Japan Ltd., Yokohama-shi Kanagawa 244-0815 (JP); Nitto Kasei Co., Ltd., Osaka-shi, Osaka 533-0031 (JP)
(72) Inventor: MASUOKA, Shigeru, Nishinomiya-shi, Hyogo 663-8136 (JP); MATSUBARA, Yoshiro, Higashinada-ku, Kobe-shi, Hyogo 658-0065 (JP); MORI, Kiyomi, Kita-ku, Kobe-shi Hyogo 651-11 (JP); OKA, Masayuki, Kobe-shi, Hyogo 658-0016 (JP)
(74) Representative: Olgemöller, Luitgard Maria
(86) International application number: PCT/JP2001/003516
(87) International publication number: WO 2001/081489

(56) References cited:
- EP-A- 0 802 243
- EP-A2- 0 364 272
- EP-A2- 1 016 681
- JP-A- 9 286 933
- JP-A- 2001 081 147

## Description

### FIELD OF THE INVENTION

This invention relates to antifouling paint, an antifouling paint film, a submerged structure(s) with antifouling paint film and a method for preventing a surface of the submerged structure(s) from fouling.

More specifically, this invention relates to an antifouling paint film which can prevent the attachment of fouling matters such as marine organisms to the surface(s) of a structure submerged in or in contact with water such as sea-water and the like, antifouling paint with which such an antifouling paint film can be formed, a submerged structure having the antifouling paint film(s) formed by using the antifouling paint on its surface(s) and used in or in contact with water and a method for preventing the attachment of fouling matters such as marine organisms to the surface(s) immersed in or in contact with water such as sea-water and the like.

### BACKGROUND OF THE INVENTION

Attachments of barnacles, serpulas, mussels, seaweeds and the like to the surfaces of submerged bodies, such as the bottom of ships, buoys, fishing nets and the like, immersed in sea-water, cause a variety of problems. It has been well known that, in order to avoid the fouling-damages by such marine organisms, paint for preventing the attachments of marine organisms is applied to the surfaces of those bodies to be submerged in sea-water in use. Most typical examples of such paint in prior arts which were developed for preventing the attachments of such marine organisms are those containing organotin polymers. Such organotin polymer-based paint is often called hydrolysable polymer-typed paint, because when used as a coating film in sea-water, hydrolysis of the organotin groups chemically bonded to each of the chains of the polymers occurs over the surface of the film in the sea-water. This hydrolysis results in chemically controlled release of biocidal organotin compounds and erosion of the surface of the paint film in or in contact with sea-water, which preserves effective fresh surface of the film for long and as a result the antifouling activity of the surface of these paint films can be maintained over a long period of time in sea-water. Therefore, these types of organotin polymer-based paint have widely used in this field so far.

However, because of the standpoint of avoiding environmental pollution with such toxic organotin compounds, use of such organotin polymer-based paint has been restricted nowadays.

In replace of these organotin polymers, other hydrolysable polymers have been proposed. They are, for example, those containing an organosilyl ester group, such as those disclosed in Japanese patents: JP-B No.5-32433, JP-A No.63-215780, JP-A No.7-102193, JP-A No.8-199095, etc. and those containing a metal carboxylate group, such as those disclosed in Japanese Patents: JP-B No.6-23319, JP-B No.6-67975, JP-B No.7-64985, JP-A No.8-209005, etc.. The term of JP-A as used herein means publication of an unexamined published Japanese patent application and the term of JP-B as used herein means publication of an examined Japanese patent application.

Usually, since such polymers containing an organosilyl ester group, when used as paint films in sea-water, can offer such a erosion property which is closed to that of paint films formed by organotin polymers, the antifouling effect of these polymers containing an organosilyl ester group may be maintained over a long period of time. However, as compared with the organotin polymers, since the erosion property of these conventional polymers containing an organosilyl ester group is sluggish in the early stage of their use in sea-water, the attachments of marine organisms onto the coated surface are found to occur in a short time especially in the case that the surface is immersed in sea-water having a low temperature or high activity of marine organisms, even though the surface of submerged structure is well coated with such a paint film formed by the conventional polymers. On the other hand, in the case of such conventional polymers containing metal carboxylate group, when used as paint films, the erosion rate of the films is fairly high in the beginning of their use but decreases to low levels during a long time of use and becomes close to zero after passing a year or eighteen months or so and as a result problems occur with the attachments of marine organisms to the surface of the deactivated paint films.

Polymers containing an organosilyl ester group and a metal carboxylate group, where these groups being chemically bonded in molecule chain of the polymer, have also been proposed(Japanese patent: JP-A No. 10-168350).

However, it was found that such conventional hybrid-typed copolymers could not offer such an improved performance that was expected by such a combination; namely the disadvantages of the respective polymers as described above remain as such in these conventional hybrid-typed copolymers. Furthermore, in order to synthesize such conventional copolymers, it is required to copolymerize a monomer containing an organosilyl ester group and a monomer containing a metal carboxylate group in a hydrophilic solvent, such as an alcohol, etc.. In such a hydrophilic solvent, the organosilyl ester is easily hydrolysed by reacting with water, which causes such a problem as follows: for example, if varnish containing the copolymer(s) thus obtained is preserved for long time, then the water resistance of the paint films prepared from such varnish becomes poor and the erosion rate of the paint films becomes too high.

In JP 9286933 A it is suggested to employ a combination of a resin having a metal carboxylate group in a molecule, designated as Rₚ-COO-M-OH, and an antifouling agent, in order to keep structures submerged in seawater from being stained by aquatic organisms. Optionally, a (meth)acrylate resin having specific trialkyl silyl groups may be present, which is either a homopolymer of dimethyl hexyl silyl (meth)acrylate or a homopolymer of dimethyl decyl silyl (meth)acrylate.

EP 802 243 A2 discloses a coating composition comprising a rosin metal salt, a polymer containing an organosilylester group and an antifoulant as essential components.

An object of this invention is to provide antifouling paint which can stably be preserved for long and can provide excellent antifouling paint films having outstanding basic paint-film properties and high water-resistance and exhibiting such a preferable film-erosion property and superior antifouling activity that can steadily be maintained for a very long period of time even from the beginning when used in sea-water.

Another object of this invention is to provide an antifouling paint film which can prevent the attachment of fouling matters such as organisms to the surface(s) of a submerged structure(s) in or in contact with water such as sea-water.

Further object of this invention is to provide antifouling paint by using of which such antifouling paint films which can prevent the attachment of fouling matters such as marine organisms to the surface(s) of a structure(s) are submerged in or in contact with water such as sea-water can be formed.

Still further object of this invention is to provide a submerged structure(s) used in or in contact with water such as sea-water, having an antifouling paint film(s) formed by using the antifouling paint of this invention on its surface(s)

Yet still further object of this invention is to provide a method for preventing the attachment of fouling matters such as marine organisms to the surface(s) submerged in or in contact with water such as sea-water.

### DISCLOSURE OF THE INVENTION

This invention involves:
antifouling paint which comprises:
   (A) one or more kinds of organosilyl-ester-group-containing polymers having at least one kind of an triorganosilyl ester group in each of the polymer molecule, where the triorganosilyl ester group is represented by the general formula (1): 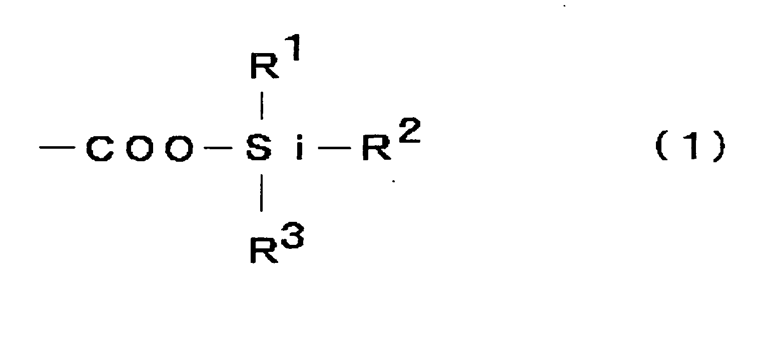 wherein in the formula (1) R¹, R² and R³ are groups each independently selected from the group consisting of the alkyl groups, cycloalkyl groups, aryl groups and aralkyl groups having a carbon number of 3 - 18 and are the same or different from each other,
      and
   (B) one or more kinds of metal-carboxylate-group-containing polymers having at least one kind of a metal carboxylate group in each of the polymer molecules, wherein the metal carboxylate group is represented by the general formula (2):

      -COO-M-X (2)
wherein in the formula (2) M is a metal selected from the group consisting of Cu, Zn, Ca and Mg and X is an organic acid residue or a hydroxy group.

In a preferred embodiment of the antifouling paint of this invention, the organosilyl-ester-group-containing polymer is at least one kind of a polymer selected from the group consisting of (meth)acrylate-copolymers, maleate-copolymer and fumarate-copolymers, where these copolymers having one or more kinds of the triorganosilyl ester groups described above; and

in another preferred embodiment of the antifouling paint of this invention, the metal-carboxylate-group-containing polymer is at least one kind of a polymer selected from the group consisting of metal (meth)acrylate-copolymers, metal maleate-copolymers and metal fumarate-copolymers, where these copolymers having one or more kinds of the metal carboxylate group described above;
also this invention involves:
an antifouling paint film, characterized in that the antifouling paint film is prepared by using the antifouling paint of this invention;
furthermore this invention involves:
a submerged structure(s) used in or in contact with water, characterized in that the surface of the hull plate of a ship, where the surface is to be submerged in or in contact with sea-water in use or the surface of a structure(s), where the surface is to be immersed in or in contact with water, is the antifouling paint film of this invention;
in addition, this invention involves:
a method for preventing a surface of a submerged structure(s) from fouling, characterized in that the method comprises the step of applying the antifouling paint of this invention to the surface of the hull plate of a ship, where the surface is to be submerged in or in contact with sea-water when used as such or to the surface of a structure(s), where the surface is to be submerged in or in contact with water when used as such, to form an antifouling paint film on their surface.

### BEST EMBODIMENT OF THE INVENTION

### (1) Antifouling Paint

The antifouling paint involved in this invention comprises a specific organosilyl-ester-group-containing polymer and a specific metal-caboxylate-group-containing polymer. That specific organosilyl-ester-group-containing polymer comprises:
(A) an organosilyl-ester-group-containing polymer having at least one kind of an triorganosilyl ester group in each of the polymer molecules, where the triorganosilyl ester group is represented by the general formula (1): 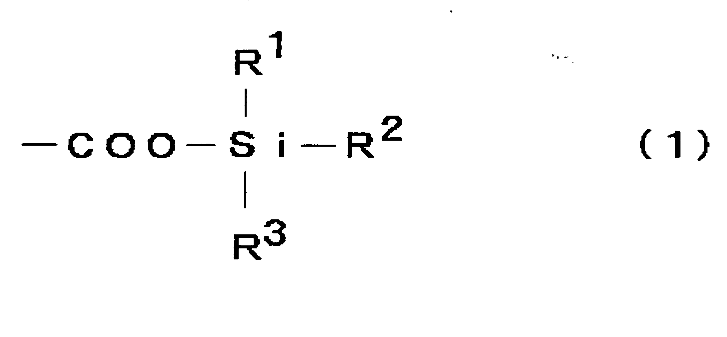 wherein in the formula (1), R¹, R² and R³ are groups each independently selected from the group consisting of the alkyl groups, cycloalkyl groups, aryl groups and aralkyl groups having a carbon number of 3 - 18 and are the same or different from each other.

The antifouling paint involved in this invention can each comprise a single kind of the organosilyl-ester-group-containing polymer or two or more kinds of the organosilyl-ester-group-containing polymers.

The triorganosilyl-ester-group-containing polymer to be used in this invention can be a polymer (hereinafter, denoted as Polymer A) of one or more kinds of organosilane monomer(s) (hereinafter, denoted as Monomer A) having an triorganosilyl ester group which is represented by the formula (1) and a copolymer (hereinafter, denoted as Copolymer AB) of one or more kinds of the above described Monomer A and one or more kinds of vinyl-typed monomer(s) (hereinafter, denoted as Monomer B) which can be copolymerized with the Monomer A.

The triorganosilyl-ester-group-containing polymer can comprise Polymer A and Copolymer AB at need.

The alkyl group represented by R¹, R² or R³ in the formula (1) can be a linear, branched or cyclic alkyl group having a carbon number of 3 - 18. Some of typical examples of the alkyl group are n-propyl, i-propyl, n-butyl, i-butyl, t-butyl, cyclohexyl, 2-ethylhexyl, lauryl and stearyl and the like.

The aryl group represented by R¹, R² or R³ in the formula (1) can be an unsubstituted aryl group or any of the aryl groups substituted by one or more kinds of group(s), such as alkyl, alkoxy, halogen atom, etc. and some of typical examples of these aryl groups are phenyl, tolyl, xylyl, ethylphenyl, isopropylphenyl, methoxyphenyl, phenoxyphenyl, chlorophenyl and naphtyl and the like.

The aralkyl group represented by R¹, R² or R³ in the formula (1) can be an unsubstituted aralkyl group or any of the aralkyl groups substituted by one or more kinds of group(s), such as alkyl, alkoxy, halogen atom, etc. and some of typical examples of the aralkyl groups are benzyl, 2-phenylethyl, 1-phenylethyl, methylbenzyl, phenoxybenzyl, chlorobenzyl and the like.

From the view point of water resistance of the paint films, the carbon number of each of the three groups R¹, R² and R³ is 3-18.

Examples of the Monomer A which are to be used in this invention can be (meth)acrylates, maleates, itaconates and fumarates and the like, where these unsaturated esters each having a triorganosilyl ester group represented by the formula (1). Each molecule of these (meth)acrylates, maleates, itaconates and fumarates may have one or two of the triorganosilyl ester group(s) represented by the formula (1). In the case that their molecule has one triorganosilyl ester group, it is preferred that the other carboxyl group, if any, has been esterified to form an ester group and in this case the alcohol residue in the latter ester group, if any, can be any of such alkyl groups, cycloalkyl groups, aryl groups aralkyl groups and the like, where each of these groups having a carbon number of 3 - 18, which are described as the examples of R¹, R² or R³.

Some of typical examples of the Monomer A can be (meth)acrylates, including tri-n-propylsilyl (meth)acrylate, tri-i-propylsilyl (meth)acrylate, tri-n-butylsilyl (meth)acrylate, tri-i-butylsilyl (meth)acrylate, tri-sec-butylsilyl (meth)acrylate, triphenylsilyl (meth)acrylate, tricyclohexylsilyl (meth)acrylate, tribenzylsilyl (meth)acrylate, tri-2-ethylhexylsilyl (meth)acrylate, di-i-propyl-n-butylsilyl (meth)acrylate, di-i-propyl-n-laurylsilyl (meth)acrylate, n-butyl-diphenylsilyl (meth)acrylate, t-butyl-diphenylsilyl (meth)acrylate, lauryl-diphenylsilyl (meth)acrylate, stearyl-diphenylsilyl (meth)acrylate and the like, maleates, including bis(tri-i-propylsilyl) maleate, bis(tri-n-butylsilyl) maleate, bis(t-butyl-diphenylsilyl) maleate, tri-i-propylsilyl methyl maleate, tri-i-propylsilyl n-butyl maleate, tri-i-propylsilyl pentyl maleate, tri-n-butylsilyl lauryl maleate and tri-n-butylsilyl stearyl maleate and the like, itaconates, including bis(tri-i-propylsilyl) itaconate, bis(tri-n-butylsilyl) itaconate, bis(t-butyl-diphenylsilyl) itaconate, tri-i-propylsilyl methyl itaconate, tri-i-propylsilyl n-butyl itaconate, tri-i-propylsilyl pentyl itaconate, tri-n-butylsilyl lauryl itaconate and tri-n-butylsilyl stearyl itaconate and the like and fumarates, including bis(tri-i-propylsilyl) fumarate, bis(tri-n-butylsilyl) fumarate, bis(t-butyl-diphenylsilyl) fumarate, tri-i-propylsilyl methyl fumarate, tri-i-propylsilyl n-butyl fumarate, tri-i-propylsilyl pentyl fumarate, tri-n-butylsilyl lauryl fumarate and tri-n-butylsilyl stearyl fumarate and the like.

Monomer B to be copolymerized with Monomer A is any of monomers which do not belong to Monomer A and can be copolymerized with the Monomer A; and some of typical examples of the Monomer B are (meth)acrylates, including methyl (meth)acrylate, ethyl (meth)acrylate, n-butyl (meth)acrylate, i-butyl (meth)acrylate, t-butyl (meth)acrylate, 2-ethylhexyl (meth)acrylate, lauryl (meth)acrylate, stearyl (meth)acrylate, phenyl (meth)acrylate, benzyl (meth)acrylate, cyclohexyl (meth)acrylate, 2-hydroxyethyl (meth)acrylate, 4-hydroxybutyl (meth)acrylate, 2-methoxymethyl (meth)acrylate, 2-ethoxymethyl (meth)acrylate, 4-methoxybutyl (meth)acrylate, dimethylaminoethyl (meth)acrylate and diethylaminoethyl (meth)acrylate and the like, maleates, including dimethyl maleate, diethyl maleate, di-n-butyl maleate, di-i-butyl maleate, di-t-butyl maleate, bis(2-ethylhexyl) maleate, dilauryl maleate, di-stearyl maleate, diphenyl maleate, dibenzyl maleate, dicyclohexyl maleate and bis(2-methoxyethyl) maleate and the like, itaconates, including dimethyl itaconate, diethyl itaconate, di-n-butyl itaconate, di-i-butyl itaconate, di-t-butyl itaconate, bis(2-ethylhexyl) itaconate, dilauryl itaconate, di-stearyl itaconate, diphenyl itaconate, dibenzyl itaconate, dicyclohexyl itaconate and bis(2-methoxyethyl) itaconate and the like and fumarates, including dimethyl fumarate, diethyl fumarate, di-n-butyl fumarate, di-i-butyl fumarate, di-t-butyl fumarate, bis(2-ethylhexyl) fumarate, dilauryl fumarate, di-stearyl fumarate, diphenyl fumarate, dibenzyl fumarate, dicyclohexyl fumarate and bis(2-methoxyethyl) fumarate and the like and in addition, other vinyl-typed monomers, including vinyl acetate, i-butylvinylether, styrene, vinyl toluene, (meth)acrylonitrile, vinyl propionate and the like,

The organosilyl-ester-group-containing polymers to be used in this invention can each be obtained by polymerizing at least one kind of the above described Monomer A or by copolymerizing at least one kind of the above described Monomer A and at least one kind of the above described Monomer B.

For these polymerizations, conventionally known polymerization initiators can be used.

The metal-caboxylate-group-containing polymer to be used in this invention has a metal carboxylate group which is represented by the general formula (2):

-COO-M-X (2)

wherein in the formula, M is a metal selected from the group consisting of Cu, Zn, Ca and Mg, and X is an organic acid residue or a hydroxy group.

Preferred metal in the metal carboxylate group represented by the formula (2) is Cu or Zn.

The organic acid residue in the metal carboxylate group means a residue group formed by removing a hydrogen atom from an organic acid. Some of typical examples of the organic acid residues are aliphatic carboxyl acid residues, aromatic carboxyl acid residues, alicyclic carboxyl acid residues and the like and among them aliphatic carboxyl acid residues are preferred.

The metal-carboxylate-group-containing polymer to be used in this invention can be a polymer (hereinafter, denoted as Polymer C) of one or more kinds of metal-carboxylate-group-containing monomer(s) (hereinafter, denoted as Monomer C) having a metal carboxylate group which is represented by the formula (2) or a copolymer (hereinafter, denoted as Copolymer CD) of one or more kinds of the above described Monomer C and one or more kinds of a vinyl-typed monomer (hereinafter, denoted as Monomer D) which can be copolymerized with Monomer C; or the like.

The metal-caboxylate-group-containing polymer in this invention may comprise Polymer C and Copolymer CD at need.

Examples of the Monomer C which are to be used in this invention can be (meth)acrylates, maleates, itaconates and fumarates and the like, where these unsaturated esters each having a metal carboxylate group which is represented by the formula (2). Each molecule of these (meth)acrylates, maleates, itaconates and fumarates may have one or two of the metal carboxylate group represented by the formula (2).

Some of typical examples of the Monomer C are zinc n-propionate (meth)acrylates, zinc octanoate (meth)acrylate, zinc versatate (meth)acrylate, zinc palmitate (meth)acrylate, zinc stearate (meth)acrylate, zinc oleate (meth)acrylate, zinc naphthenate (meth)acrylate, zinc benzoate (meth)acrylate, copper n-propionate (meth)acrylates, copper octanoate (meth)acrylate, copper versatate (meth)acrylate, copper palmitate (meth)acrylate, copper stearate (meth)acrylate, copper oleate (meth)acrylate, copper naphthenate (meth)acrylate, copper benzoate (meth)acrylate, calcium n-propionate (meth)acrylates, calcium octanoate (meth)acrylate, calcium naphthenate (meth)acrylate, magnesium octanoate (meth)acrylate, magnesium versatate (meth)acrylate, magnesium stearate (meth)acrylate, magnesium oleate (meth)acrylate, magnesium naphthenate (meth)acrylate, copper hydroxide (meth)acrylate, zinc hydroxide (meth)acrylate, (meth)acrylate, magnesium hydroxide (meth)acrylate, calcium hydroxide (meth)acrylate and the like.

Monomer D to be copolymerized with Monomer C is any of monomers which do not belong to Monomer C and can be copolymerized with Monomer C; and typical examples of Monomer D can be the same ones described as those of Monomer B.

The metal-caboxylate-group-containing polymers to be used in this invention can each be obtained by polymerizing at least one kind of the above described Monomer C or by polymerizing at least one kind of the above described Monomer C and at least one kind of the above described Monomer D or by mixing Polymer C and Polymer CD.

For these polymerizations, conventionally known polymerization initiators can be used. A variety of polymerization techniques, such as bulk polymerization, solution polymerization, emulsion polymerization, etc. can be applied.

The antifouling paint involved in this invention essentially comprises the above described organosilyl-ester-group-containing polymer(s) and the above described metal-carboxylate-group-containing polymer(s) and they can further contain conventionally known component(s) and/or reagent(s) which have been use in conventional paint.

For the antifouling paint, the totaled content of the organosilyl-ester-group-containing polymer(s) and the metal-carboxylate-group-containing polymer(s) in the antifouling paint can be usually in the range of 1- 80 weight %, preferably in the range of 5 - 30 weight % on the base of the whole amount of the paint itself.

A variety kinds of conventional antifouling can be added to be contained in the antifouling paint of this invention as a known additive component(s) an/or reagent(s) at need. Since the antifouling paint of this invention contains the organosilyl-ester-group-containing polymer(s) and metal-caboxylate-group-containing polymer(s), when used as paint films in water, the attachments of organisms that inhabit in that water to the surface of the paint films can be prevented with the antifouling effect based on these polymers; however, it may be required, in some cases, that a further improvement in their antifouling activity by adding an antifolding or antifouling agent(s) to be contained in the antifouling paint of this invention.

The antifolding or antifouling agents which can be used for such an improvement include a wide variety of conventionally known antifouling agents and they are roughly classified into inorganic compounds, metal-containing organic compounds and nonmetal organic compounds.

The inorganic compounds which can be used as an antifolding or antifouling agent(s) are, for example, copper compounds, including cuprous oxide, copper powder, cuprous thiocyanate, copper carbonate, copper sulfate and the like; zinc sulfate, zinc oxide, nickel sulfate and nickel-copper alloys and the like.

The metal-containing organic compounds which can be used as an antifouling agent(s) are, for example, copper-containing organic compounds, nickel-containing organic compounds, zinc-containing organic compounds and the like; and maneb, manseb, propineb. Some of typical examples of the copper-containing organic compounds are copper oxine complex salts, copper nonylphenolsulphonate, copper bis(ethylenediamine)-bis(dodecylbenzenesulfonate), copper acetate, copper naphthate, copper bis(pentachlorophenolate), copper pyrithione and the like. Some of typical examples of the nickel-containing organic compounds are nickel acetate, nickel dimethyldithiocarbamate and the like. Some of typical examples of the zinc-containing organic compounds are zinc acetate, zinc carbamate, zinc dimethyldithiocarbamate, zinc pyrithione, zinc ethylenebisthiocarbamate and the like.

The nonmetal organic compounds which can be used as an antifoulding agent(s) are, for example, N-trihalomethylthiophthalimides, dithiocarbamic acids, N-arylmaleimides, 3-(substituted-amino)-1,3-thiazolidine-2,4-diones, dithiocyano compounds, triazines and so on.

Some of typical examples of the N-trihalomethylthiophthalimides are N-trichloromethylthiophthalimide, N-florodichrolomethylthiophthalimide and the like. Some of typical examples of the dithiocarbamic acids are bis(dimethylthiocarbamoyl) disulfide, ammonium N-methyldithiocarbamate, ammonium ethylenebisdithiocarbamate, milneb and the like.

Some of typical examples of the N-arylmaleimides are N-(2,4,6-trichlorophenyl)maleimide, N-4-tolylmaleimide, N-3-chlorophenylmaleimide, N-(4-n-butylphenyl)maleimide, N-(anilinophenol)maleimide, N-(2,3-xylyl)maleimide and the like.

Some of typical examples of the 3-(substituted amino)-1,3-thiazolidine-2,4-diones are 3-benzylideneamino-1,3-thiazolidine-2,4-dione, 3-(4-methylbenzylideneamino)-1,3-thiazolidine-2,4-dione, 3-(2-hydroxybenzylideneamino)-1,3-thiazolidine-2,4-dione, 3-(4-dimethylbenzylideneamino)-1,3-thiazolidine-2,4-dione and the like.

Some of typical examples of the dithiocyano compounds are dithiocyanomethane, dithiocyanoethane and 2,5-dithiocyanothiophene and the like. Some of typical examples of the triazines are 4-dimethylthio-4-t-butylamino-6-cyclopropylamino-s-triazine and the like.

Some of othe typical examples of the nonmetal organic compounds are 2,4,5,6-tetrachloroisophthalonitrile, N,N-dimethyl-N'-dichlorophenylurea, 4,5-dichloro-2-n-octylisothiazoline-3-one, N,N-dimethyl-N'-phenyl-(N-fluorodichloromethylthio)sulfamide, tetramethylthiuram sulfide, 3-iodo-2-propynylbutyl carbamate, 2-(methoxycarbonylamino)benzimidazole, 2,3,5,6-tetrachloro-4-(methylsulfonyl) pyridine, diiodomethylparatolyl sulfone, phenyl(bispyridine)bismuth dichloride, 2-(4-thiazolyl)benzimidazole, triphenylboronpyridine and the like.

Furthermore, a wide variety of different components or agents other than the antifouling agents can also be added to be contained in the antifouling paint involved in this invention. These additives are for example, pigments, including red iron oxide, talc, titanium dioxide and the like; colorants, such as dyes, etc.; dehumidifiers; antisagging agent which have commonly been used in conventional paint; and plasticizers, including chlorinated paraffins, dioctylphthalates and tricresyl phosphates and the like; UV absorbers including benzophenones, benzotriazols and the like; antisettling agents, antiflooding agents, antiforming or antifoaming agents and a variety of other additives, including silanols, polysiloxanes, alkoxysilanes and the like; rosins or resins, including tall rosin, gum rosin, wood rosin and the like; rosin-derivatives, including hydrated rosins, maleic rosins obtained reacting rosins with maleic anhydride, formylated rosins, polymerized rosins and the like; metal salts of rosins, including calcium rosinates, zinc rosinates, copper rosinates and magnesium rosinates or resins and resinates of the aforementioned kind, and products obtained by the reaction of other metal compounds and rosin or resin and the like.

The antifouling paint of this invention can be prepared by mixing the above described organosilyl-ester-group-containing polymer(s), the above described metal-carboxylate-group-containing polymer(s) and suitable components or agents which are added to be contained in the paint at need, according to known methods or processes by using known machines or machineries, instruments, appratuses and other measures.

### (2) Antifouling Paint Film, Structure Used In Or In Contact With Water, Method For Preventing A Surface Of aA Submerged Structure(s) From Fouling

The antifouling paint films involved in this invention can be formed by applying the antifouling paint involved in this invention to the surfaces of immersion-typed structure(s) submerged in or into water or sea-water by using known procedures or techniques, followed by drying.

The above described immersion-typed structures can be a wide variety of structures whose surfaces are partially or totally to be submerged in or in contact with water when used as such, including the hull plate(s) of a variety kinds of ships (including warships and the like), buoys and frames for excavations of natural resources, such as petroleum, natural gas, etc. and so on.

For the above described immersion-typed structures, the surfaces to which the antifouling paint of this invention is to be applied or on which the antifouling paint film(s) of this invention is to be formed are those which are to be submerged in or in contact with water.

Accordingly, the structures of this invention which are to be used in or in contact with water include those prepared by forming to yield the antifouling paint film(s) of this invention on such surfaces of the hull plates of ships or immersion-typed structures that are to be submerged in or in contact with sea-water in use. The thickness of these antifouling paint films is not particularly restricted. Furthermore, the another feature of this invention involve methods for preventing a surface(s) of a submerged structure(s) from fouling characterized by applying the antifouling paint of this invention to the surface of an immersion-typed structure, the surface of which is to be submerged or immersed in or in contact with sea-water.

Prior to the application of the antifouling paint of this invention to the surface, a primer and the like can be applied to that surface.

This invention is more clearly described with reference to the following examples: Examples of the preparations, Examples of this invention and Comparative examples thereof. In these examples, the units shown as part(s) or % are those of weight-base.

### (The preparation example 1)

Into a flask equipped with a thermometer, a reflux condenser, a stirrer and a dropping funnel 100g of xylene were introduced and heated up to 80-90 °C under the atmosphere of nitrogen and then to the liquid in this flask a mixed solution containing 67.5g of tributylsilyl methacrylate, 67.5g of methyl methacrylate, 15g of 2-ethylhexyl acrylate and 0.4g of azobisisobutyronitrile was added by dropping over a period of time of 2hrs while the temperature of the solution in the flask keeping at 80-90 °C under the atmosphere of nitrogen. After this dropping was completed, the reaction was allowed to continue at the same temperature by adding 0.2g of azobisisobutyronitrile every one hour three times and after the reaction was completed, by adding 50g of xylene to the resulting mixture a solution of an organosilyl ester group-containing copolymer (Varnish A-1) was obtained. The varnish thus obtained was a solution having a viscosity at 25 °C of 280cps, 50.3% of nonvolatile matter.

### (The preparation example 2)

Into a flask equipped with a thermometer, a reflux condenser, a stirrer and a dropping funnel 100g of xylene were introduced and heated up to 80-90 °C under the atmosphere of nitrogen and then to the liquid in this flask a mixed solution containing 97.5g of tri-i-propylsilyl methacrylate, 37.5g of methyl methacrylate, 15g of 2-methoxethyl acrylate and 0.4g of azobisisobutyronitrile was added by dropping over a period of time of 2hrs while the temperature of the solution in the flask keeping at 80-90 °C under the atmosphere of nitrogen. After this dropping was completed, the reaction was allowed to continue at the same temperature by adding 0.2g of azobisisobutyronitrile every one hour three times and after the reaction was completed, by adding 50g of xylene to the resulting mixture a solution of an organosilyl ester group-containing copolymer (Varnish A-2) was obtained. The varnish thus obtained was a solution having a viscosity at 25 °C of 250cps, 49.9% of nonvotile matter.

### (The preparation example 3)

Into a flask equipped with a thermometer, a reflux condenser, a stirrer and a dropping funnel 100g of xylene were introduced and heated up to 80-90 °C under the atmosphere of nitrogen and then to the liquid in this flask a mixed solution containing 45g of t-buthyldiphenylsilyl acrylate, 37.5g of methyl methacrylate, 67.5g of 2-methoxyethyl methacrylate and 0.4g of azobisisobutyronitrile was added by dropping over a period of time of 2h while the temperature of the solution in the flask keeping at 80-90 °C under the atmosphere of nitrogen. After this dropping was completed, the reaction was allowed to continue at the same temperature by adding 0.4g of azobisisobutyronitrile every one hour three times and after the reaction was completed, by adding 50g of xylene to the resulting mixture a solution of an organosilyl ester group-containing copolymer (Varnish A-3) was obtained. The varnish thus obtained was a solution having a viscosity at 25 °C of 350cps, 49.8% of nonvolatile matter.

### (The preparation example 4)

Into a flask equipped with a thermometer, a reflux condenser, a stirrer and a dropping funnel 100g of xylene and 20g of n-butanol were introduced and heated up to 100-110 °C and then, under the atmosphere of nitrogen, to the liquid in this flask a mixed solution containing 25.7g of acrylic acid, 57.8g of ethyl acrylate, 16.5g of methyl methacrylate and 3g of azobisisobutyronitrile was added by dropping over a period of time of 4hr . After this dropping was completed, the temperature was maintained at 110 °C for 30min and then to the content in the flask a mixed solution containing 20g of xylene, 10g of n-butanol and 0.5g of azobisisobutyronitrile was added by dropping over a period of time of 1h. After this dropping was completed, the temperature was maintained at 110 °C for 2hr. After the dropping funnel was replaced by a decantor, to the content of the flask 18.5g of copper propionate, 25g of naphthenic acid and 50g of deionized water was added and the reaction was completed at 100 °C and then by removing the propionic acid produced by the reaction and water from the resulting mixture, a solution of a metal carboxylate-containing copolymer (Varnish B-1) was obtained. The varnish thus obtained was a solution having a viscosity at 25 °C of 185cps, 50.3% of nonvolatile matter.

### (The preparation example 5)

Into a flask equipped with a thermometer, a reflux condenser, a stirrer and a dropping funnel 50g of butyl acetate and 50g of butanol were introduced and heated up to 100-110 °C and then to the liquid in this flask, under the atmosphere of nitrogen, a mixed solution containing 10.8g of acrylic acid, 64.2g of ethyl acrylate, 75g of methyl methacrylate and 3g of azobisisobutyronitrile was added by dropping over a period of time of 4h. After this dropping was completed, the temperature was maintained at 110 °C for 1 h and then to the content in the flask a mixed solution containing 30g of butyl acetate and 0.5g of azobisisobutyronitrile was added by dropping over a period of time of 1 h. After that, to the content of the flask 12g of zinc oxide, 20g of butanol and 1.5g of water was added and by conducting the reaction at 120 °C for 10h, a solution of a metal carboxylate-containing copolymer (Varnish B-2) was obtained. The varnish thus obtained was a solution having a viscosity at 25 °C of 430cps, 50.9% of nonvolatile matter.

### (Comparative Example of the preparation 1)

Into a flask equipped with a thermometer, a reflux condenser, a stirrer and a dropping funnel 60g of xylene and 45g of propylene glycol methyl ether were introduced and heated up to 100-110 °C and then, under the atmosphere of nitrogen, to the liquid in this flask a mixed solution containing 67.5g of tributylsilyl methacrylate, 45g of methyl methacrylate, 30g of 2-ethylhexyl acrylate, 7.5g of magnesium acrylate and 3g of t-butyl peroctanate was added by dropping over a period of time of 3h. After this dropping was completed, a mixed solution containing 1.5g of t-butyl peroctanate and 15g of xylene was added by dropping over a period of time of 2h and then, after agitating the content in the flask for 2h, by adding 30g of xylene a solution of an organosilyl ester group/metal carboxylate group-containing copolymer (Varnish C-1) was obtained. The varnish thus obtained was a solution having a viscosity at 25 °C of 380cps, 50.1% of nonvolatile matter.

### (Examples 1-8, Comparative Examples 1-5)

By using Varnish A-1, A-2, A-3, B-1, B-2 and C-1 prepared in Examples of the preparation 1-5 or Comparative Example of the preparation 1, some examples of antifouling paint of this invention and an example of comparative antifouling paint were prepared by mixing, at the respective ratios, the components shown in Tables 1 and 2.

**Table 1**

| | Component | Example | | | | | | | | Comparative Example | | | | |
|---|---|---|---|---|---|---|---|---|---|---|---|---|---|---|
| | | 1 | 2 | 3 | 4 | 5 | 6 | 7 | 8 | 1 | 2 | 3 | 4 | 5 |
| Polymer Solution | A-1 | 25 | 20 | 15 | | | | | 40 | 35 | | | | |
| | A-2 | | | | 25 | 20 | 15 | 10 | | | 35 | | | |
| | A-3 | | | | | | | 10 | | | | 35 | | |
| | B-1 | 10 | 15 | 20 | | | | | 5 | | | | 35 | |
| | B-2 | | | | 10 | 15 | 15 | 15 | | | | | | |
| | C-1 | | | | | | | | | | | | | 35 |
| Pigment | (a) | 40 | 40 | 40 | 35 | 35 | 35 | 35 | | 35 | 35 | 35 | 40 | 40 |
| | (b) | | | | 5 | 5 | 5 | | 5 | 5 | 5 | 5 | | |
| | (c) | 2 | 2 | 2 | 2 | 2 | 2 | 2 | 5 | 2 | 2 | 2 | 2 | 2 |
| | (d) | 2 | 2 | 2 | 2 | 2 | 2 | 2 | | 2 | 2 | 2 | 2 | 2 |
| | (e) | 3 | 3 | 3 | 3 | 3 | 3 | 3 | 3 | 3 | 3 | 3 | 3 | 3 |

**Table 2**

| | Component | Example | | | | | | | | Comparative Example | | | | |
|---|---|---|---|---|---|---|---|---|---|---|---|---|---|---|
| | | 1 | 2 | 3 | 4 | 5 | 6 | 7 | 8 | 1 | 2 | 3 | 4 | 5 |
| Other Resins | (f) | | | | | | 2 | | | | | | | |
| | (g) | | | | | | | 2 | | | | | | |
| | (h) | | | | | | | | | | | | | |
| Plasticizers | (i) | 1 | 1 | 1 | | | | | | 1 | 1 | 1 | | |
| | (j) | | | | 1 | 1 | 1 | | | | | | | |
| | (k) | | | | | | | 1 | | | | | 1 | 1 |
| Organic Reagents | (l) | 3 | | | | 3 | | | | 3 | | | | |
| | (m) | | 3 | | | | 3 | | | | 3 | | | |
| | (n) | | | 3 | | | | 3 | | | | 3 | | 3 |
| | (o) | | | | 3 | | | | | | | | 3 | |
| | (p) | | | | | | | | 15 | | | | | |
| Dispersant | (q) | 1 | 1 | 1 | 1 | 1 | 1 | 1 | 1 | 1 | 1 | 1 | 1 | 1 |
| Solvents | (r) | 13 | 13 | 13 | 13 | 13 | 10 | 10 | 24 | 13 | 13 | 5 | 5 | 5 |
| | (s) | | | | | | 6 | 6 | | | | 8 | 8 | 8 |

Notes of Tables 1 and 2:
(a) cuporous oxide,
(b) zinc oxide,
(c) titanium dioxide,
(d) red iron oxide,
(e) talc,
(f) rosin,
(g) rosin-zinc salt,
(h) LutnalA-25,
(i) tricresyl phosphate,
(j) dioctyl phthalate,
(k) chlorinated paraffin,
(l) tetrachloroisophthalonitrile,
(m) 3,4-dichlorophenyl-1,1-dimethylurea,
(n) 2-mercaptopyridine-N-oxide-zinc salt,
(o) 2-mercaptopyridine-N-oxide-copper salt,
(p) triphenylboron-pyridine salt,
(q) Disperon #4300,
(r) xylene,
(s) butyl acetate

### (Erosion Test of the paint films)

A rotatable drum having a diameter of 318 mm a height of 440mm was mounted to a water bath and this drum rotated with a motor at need. To this system a heating device and a cooling device were equipped so as to keep the temperature of sea-water in the bath constant and a pH controller was also equipped in order to maintain the pH of the sea-water at a constant value.

Each sample of the paint obtained in Examples 1-9 or Comparative Examples 1-4 shown above was applied to a rigid polyvinylchrolid plate(75x150x1 mm) so as to obtain a paint film having a dry-base film thickness of about 200 micrometers on its surface, followed by drying at 40 °C for one day. Furthermore, although the application of the paint obtained in Comparative Example 5 was attempted in the same way, this could not be done because the viscosity of this paint had become too high and gelation had occurred in this paint.

The thus prepared test-plates having the respective paint films were fixed on the rotatable drum in such a way that the paint films could be in contact with the sea-water and this test-plate-fixed drum was rotated in the sea water at a rate of about 20 knots over long periods of time. During this test of the paint films, the temperature of the sea-water was maintained at 25 °C and its pH value was kept at 8.0-8.2; and the used sea-water was replaced by fresh sea-water every one week. In this test, the thickness of the paint films on the respective test-plates was measured by using a microscope, the reductions in thichness of each paint film by its erosion were calculated by the difference between the film-thichness measured at the initial stage and at each time. The film-thichness were measured at three different points of each paint film for each time and the averaged value of the erosion amount of each paint film was calculated. The results are listed in Table 3, where the erosion amount of the paint films are expressed as the film-thichness reductions per month(unit:µ/month).

**Table 3**

| | Amount of erosion of paint flm (*µ*/month) | | | | | | note |
|---|---|---|---|---|---|---|---|
| | After a month | After 3 months | After 6 months | After 12 months | After 18 months | After 24 months | |
| Example 1 | 3.5 | 3.8 | 4 | 4.5 | 4.8 | 4.8 | |
| Example 2 | 5.1 | 5.0 | 5.3 | 4.9 | 4.7 | 4.5 | |
| Example 3 | 5.8 | 5.8 | 4.9 | 4.3 | 3.9 | 3.7 | |
| Example 4 | 6 | 5.5 | 5.3 | 4.4 | 3.8 | 3.2 | |
| Example 5 | 4.5 | 4.6 | 4.8 | 4.4 | 4.3 | 4.5 | |
| Example 6 | 8.2 | 8.5 | 7.5 | 6.8 | 6.2 | 6 | |
| Example 7 | 5.7 | 6.2 | 6 | 5.5 | 5.8 | 5.4 | |
| Example 8 | 6.6 | 6.3 | 6.4 | 6.4 | 6.6 | 6.6 | |
| Comparative Example 1 | 1.1 | 1.0 | 1.3 | 1.9 | 2.2 | 2.5 | |
| Comparative Example 2 | 0.2 | 0.3 | 0.3 | 0.5 | 0.8 | 1 | |
| Comparative Example 3 | 25.3 | 14.5 | 10.1 | 2.1 | 1.1 | 0.9 | |
| Comparative Example 4 | 17.1 | 12.3 | 7.4 | 6.4 | 5.8 | 5.1 | Crack occurres in a paint film after 12 months |
| Comparative Example 5 | - | - | - | - | - | - | |

### (Antifouling Performance Tests)

Each sample of the paint obtained in Examples 1-8 or Comparative Examples 1-4 was applied to the both sides of the surface of a rigid polyvinylchrolide plate(100x200x2mm) so as to obtain a paint films having a dry-base film thickness of about 200 micrometers on the each surface. As described above, the application of the paint obtained in Comparative Example 5 could not be done because its very high viscosity and gelation.

The thus prepared test-plates having the respective paint films were immersed in the sea-water, 1 m below the surface of the sea, off the coast of Owase city in Mie prefecture in Japan and the fouling of the surface of the paint film on each test-plate by the attachment of marine organisms were examined over the period of 36 months. The results are shown in Table 4. It was found that there were no attachments of seaweeds, barnacles, seruplas and so on to the surfaces of the test-plates coated with the each paint obtained in Examples 1-9, but the attachments of those sea organisms were observed for the test-plates prepared with the each paint obtained in Comparative Examples 1-4.

**Table 4**

| | Antifouling Effect | | | | | |
|---|---|---|---|---|---|---|
| | After 3 months | After 6 months | After 9 months | After 12 months | After 18 months | After 24 months |
| Example 1 | 0 | 0 | 0 | 0 | 0 | 0 |
| Example 2 | 0 | 0 | 0 | 0 | 0 | 0 |
| Example 3 | 0 | 0 | 0 | 0 | 0 | 0 |
| Example 4 | 0 | 0 | 0 | 0 | 0 | 0 |
| Example 5 | 0 | 0 | 0 | 0 | 0 | 0 |
| Example 6 | 0 | 0 | 0 | 0 | 0 | 0 |
| Example 7 | 0 | 0 | 0 | 0 | 0 | 0 |
| Example 8 | 0 | 0 | 0 | 0 | 0 | 0 |
| Comparative Example 1. | 0 | 10 | 50 | 100 | 100 | 100 |
| Comparative Example 2 | 0 | 30 | 70 | 100 | 100 | 100 |
| Comparative Example 3 | 0 | 0 | 0 | 10 | 30 | 50 |
| Comparative Example 4 | 0 | 0 | 0 | 10 | 30 | 70 |
| Comparative Example 5 | --- | --- | --- | --- | --- | --- |

### APPLICATION FIELD OF THE INVENTION

According to this invention:
excellent antifouling paint films exhibiting such a preferable film-erosion property and superior antifouling activity that can steadily be maintained for a very long period of time even from the beginning when used in sea-water and having outstanding basic paint-film properties and high water-resistance can be provided;
antifouling paint by using of which such excellent antifouling paint films can be formed, which can stably be preserved for long, can be provided;
structures used in or in contact with water such as sea-warter, having an antifouling paint film(s) formed by using the antifouling paint of this invention on its surface(s), by using of which such antifouling paint films which can easily prevent the attachment of marine organisms, such as barnacles and the like, to their surface(s) can be provided; and methods for preventing from fouling to prevent the attachment of marine organisms, such as barnacles and the like, to the surface(s) of the hull of ships or structures immersed in or in contact with sea-water can be provided.

## Claims

1. Antifouling paint which comprises:
(A) one or more kinds of organosilyl-ester-group-containing polymers having at least one kind of an organosilyl ester group in each of the polymer molecules, where the triorganosilyl ester group is represented by the general formula (1): 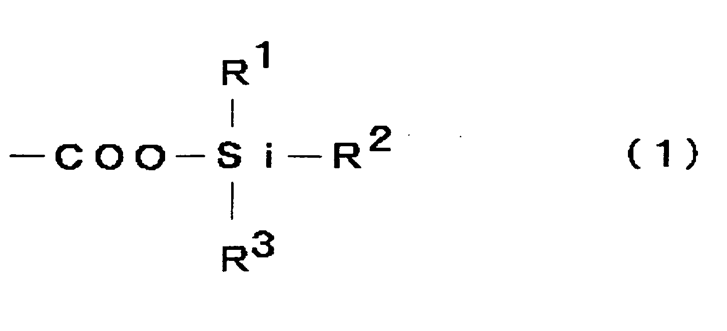 wherein in the formula (1) R1, R2 and R3 are groups each independently selected from the group consisting of the alkyl groups, cycloalkyl groups, aryl groups and aralkyl groups having a carbon number of 3 - 18, and are the same or different from each other,
and
(B) one or more kinds of metal-caboxylate-group-containing polymers having at least one kind of an metal carboxylate group in each of the polymer molecules, where the metal carboxylate group is represented by the general formula (2):
-COO-M-X (2)
wherein in the formula (2) M is a metal selected from the group consisting of Cu, Zn, Ca and Mg, and X is an organic acid residue or a hydroxy group.

2. Antifouling paint as claimed in Claim 1, wherein the organosilyl-ester-group-containing polymer is at least one kind of a polymer selected from the group consisting of (meth)acrylate-copolymers, maleate-copolymers and fumarate-copolymers, where these copolymers having one or more kinds of the triorganosilyl ester groups.

3. Antifouling paint as claimed in Claim 1, wherein the metal-carboxylate-group-containing polymer is at least one kind of a polymer selected from the group consisting of metal (meth)acrylate-copolymers, metal maleate-copolymers and metal fumarate-copolymers, where these copolymers having one or more kinds of the metal carboxylate groups.

4. An antifouling paint film **characterized in that** the antifouling paint film is prepared by using the antifouling paint as claimed in Claim 1, Claim 2 or Claim 3.

5. A submerged structure in or in contact with water, **characterized in that** the surface of the hull of a ship, where the surface is to be submerged in or in contact with sea-water in use or the surface of a structure, where the surface is to be submerged in or in contact with water, is the antifouling paint film as claimed in Claim 4.

6. A method for preventing from fouling, **characterized in that** the method comprises the step of applying the antifouling paint as claimed in Claim 1, Claim 2 or Claim 3 to the surface of the hull of a ship, which is to be submerged in or in contact with sea-water when used as such or to the surface of a structure(s), to form an antifouling paint film on their surface.

## Patentansprüche

1. Bewuchshemmendes Anstrichmittel, umfassend:
(A) eine oder mehrere Arten von Organosilylester-Gruppen enthaltendem/enthaltenden Polymer(en) mit mindestens einer Art einer Organosilylester-Gruppe in jedem der Polymer-Moleküle, worin sich die Triorganosilylester-Gruppe durch die allgemeine Formel (1) darstellen lässt: 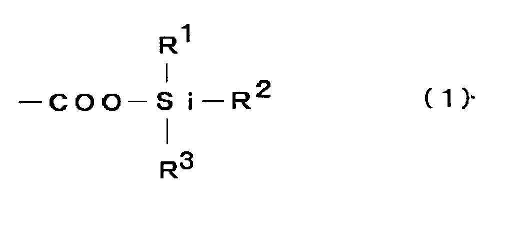 worin in der Formel (1) R¹, R² und R³ Reste sind, die jeweils unabhängig voneinander aus der Gruppe ausgewählt sind, die aus den Alkylgruppen, Cydoalkylgruppen, Arylgruppen und Aralkylgruppen mit einer Kohlenstoffanzahl von 3 bis 18 besteht, und die identisch sind oder voneinander abweichen,
und
(B) eine oder mehrere Arten von Metallcarboxylat-Gruppen enthaltendem/enthaltenden Polymer(en) mit mindestens einer Art einer Metallcarboxylat-Gruppe in jedem der Polymer-Moleküle, worin sich die Metallcarboxylat-Gruppe durch die allgemeine Formel (2) darstellen lässt:
-COO-M-X (2)
worin in der Formel (2) M ein Metall ist, ausgewählt aus der aus Cu, Zn, Ca und Mg bestehenden Gruppe, und X ein organischer Säurerest oder eine Hydroxygruppe ist.

2. Bewuchshemmendes Anstrichmittel wie in Anspruch 1 beansprucht, worin das Organosilylester-Gruppen enthaltende Polymer mindestens eine Art eines Polymeren ist, ausgewählt aus der aus (Meth)Acrylat-Copolymeren, Maleat-Copolymeren und Fumarat-Copolymeren bestehenden Gruppe, wobei diese Copolymere eine oder mehrere Arten der Triorganosilylester-Gruppen aufweisen.

3. Bewuchshemmendes Anstrichmittel wie in Anspruch 1 beansprucht, worin das Metallcarboxylat-Gruppen enthaltende Polymer mindestens eine Art eines Polymeren ist, ausgewählt aus der aus Metall-(Meth)Acrylat-Copolymeren, Metall-Maleat-Copolymeren und Metall-Fumarat-Copolymeren bestehenden Gruppe, wobei diese Copolymere eine oder mehrere Arten der Metallcarboxylat-Gruppen aufweisen.

4. Bewuchshemmender Anstrichfilm oder bewuchshemmende Anstrichschicht oder -folie, **dadurch gekennzeichnet, dass** der bewuchshemmende Anstrichfilm oder die bewuchshemmende Anstrichschicht oder-folie unter Einsatz des bewuchshemmenden Anstrichmittels wie in Anspruch 1, Anspruch 2 oder Anspruch 3 beansprucht hergestellt ist.

5. Eine ein- oder untergetauchte Struktur in oder in Kontakt mit Wasser, **dadurch gekennzeichnet, dass** die Oberfläche eines Schiffskörpers oder Schiffsrumpfs, soweit dessen Oberfläche während des Gebrauchs in oder in Kontakt mit Seewasser eingetaucht werden muss, oder die Oberfläche einer Struktur eines Aufbaus, soweit deren/dessen Oberfläche in oder in Kontakt mit Wasser getaucht werden muss, der bewuchshemmende Anstrichfilm oder die bewuchshemmende Anstrichfolie oder -schicht wie in Anspruch 4 ist.

6. Verfahren zum Vermeiden des Ansetzens von Bewuchs, **dadurch gekennzeichnet, dass** das Verfahren den Schritt des Aufbringens eines bewuchshemmenden Anstrichmittels, wie in Anspruch 1, Anspruch 2 oder Anspruch 3 beansprucht, auf die Oberfläche eines Schiffsrumpfs oder Schiffskörpers, der, wenn er als solcher gebraucht werden soll, in oder in Kontakt mit Seewasser getaucht werden muss, oder auf die Oberfläche einer Struktur oder von Strukturen umfasst, um einen bewuchshemmenden Anstrichfilm oder eine solche Folie oder Schicht auf der jeweiligen Oberfläche auszubilden.

## Revendications

1. Peinture anti-encrassement qui comprend :
(A) un ou plusieurs types de polymères contenant un groupe organosilyl-ester ayant au moins un type de groupe organosilyl-ester dans chacune des molécules du polymère, dans lesquels le groupe triorganosilyl-ester est représenté par la formule générale (1) : 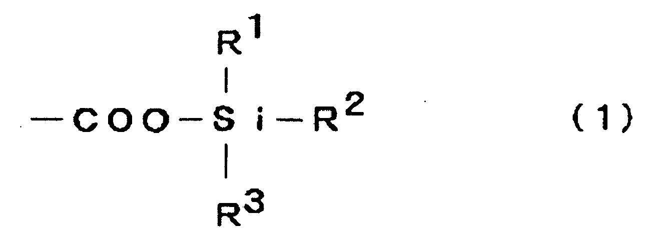 où dans la formule (1), R1, R2 et R3 sont des groupes choisis chacun indépendamment dans le groupe consistant en les groupes alkyle, les groupes cycloalkyle, les groupes aryle et les groupes aralkyle ayant 3 à 18 atomes de carbone, et sont identiques ou différents les uns des autres,
et
(B) un ou plusieurs types de polymères contenant un groupe carboxylate métallique, ayant au moins un type d'un groupe carboxylate métallique dans chacune des molécules du polymère, dans lesquels le groupe carboxylate métallique est représenté par la formule générale (2) :
-COO-M-X (2)
où dans la formule (2), M représente un métal choisi dans le groupe consistant en Cu, Zn, Ca et Mg et X représente un résidu d'acide organique ou un groupe hydroxy.

2. Peinture anti-encrassement suivant la revendication 1, dans laquelle le polymère contenant un groupe organosilyl-ester est au moins un type d'un polymère choisi dans le groupe consistant en des copolymères de (méth)acrylate, des copolymères de maléate et des copolymères de fumarate, ces copolymères comprenant un ou plusieurs types de groupes triorganosilyl-ester.

3. Peinture anti-encrassement suivant la revendication 1, dans laquelle le polymère contenant un groupe carboxylate métallique est au moins un type d'un polymère choisi dans le groupe consistant en des copolymères de (méth)acrylate contenant un métal, des copolymères de maléate contenant un métal et des copolymères de fumarate contenant un métal, ces copolymères comprenant un ou plusieurs types des groupes carboxylate métallique.

4. Film de peinture anti-encrassement **caractérisé en ce qu'**il est préparé en utilisant la peinture anti-encrassement suivant la revendication 1, la revendication 2 ou la revendication 3.

5. Structure immergée dans, ou en contact avec, l'eau, **caractérisée en ce que** la surface de la coque d'un navire, la surface devant être immergée dans ou être en contact avec l'eau de mer lors de l'utilisation, ou bien la surface d'une structure, la surface devant être immergée dans ou être en contact avec l'eau, est le film de peinture anti-encrassement suivant la revendication 1.

6. Procédé pour empêcher l'encrassement, **caractérisé en ce qu'**il comprend l'étape d'application de la peinture anti-encrassement suivant la revendication 1, la revendication 2 ou la revendication 3 à la surface de la coque d'un navire, qui doit être immergée dans ou être en contact avec l'eau de mer lors de l'utilisation telle quelle, ou bien à la surface d'une ou plusieurs structures, pour former un film de peinture anti-encrassement sur leur surface.
